# EUROPEAN PATENT SPECIFICATION

(11) **EP 3 655 710 B1**
(45) Date of publication and mention of the grant of the patent: **07.06.2023**
(21) Application number: 18765542.8
(22) Date of filing: 18.07.2018
(51) Int. Cl.: F24F 13/02

(54) **REINFORCING ASSEMBLY FOR AIR DUCTS AND AIR DUCT SYSTEM**
VERSTÄRKUNGSANORDNUNG FÜR LUFTKANÄLE UND LUFTKANALSYSTEM
ENSEMBLE DE RENFORT POUR CONDUITES D'AIR ET SYSTÈME DE CONDUITES D'AIR

(30) Priority: 18.07.2017 CZ 20170416
(43) Date of publication of application: 27.05.2020
(73) Proprietor: Prihoda s.r.o., 53901 Hlinsko (CZ)
(72) Inventor: PRIHODA, Zdenek, 53901 Hlinsko (CZ)
(74) Representative: Zemanová, Veronika
(86) International application number: PCT/CZ2018/050040
(87) International publication number: WO 2019/015705

(56) References cited:
- EP-A1- 1 719 939
- EP-A2- 2 426 427
- WO-A1-2016/187291
- WO-A1-2017/024301
- FR-A1- 2 410 202
- US-A- 3 538 956
- US-A- 5 526 849
- US-A- 5 785 091
- US-A1- 2014 332 111
- US-B1- 8 434 526

## Description

### FIELD OF THE INVENTION

The present invention relates to an air duct with a reinforcing assembly, the assembly comprising a helical reinforcement, the outer circumference of which being intended for defining an internal cylindrical perimeter of an air duct.

### BACKGROUND ART

Air-conditioning ducts for transport or distribution of air, the ducts being made of a woven or non-woven fabric or foil, are known in the art. They are also called textile diffusers and they are made from a material sewn to form closed cross-sections of various shapes. The cross-section is usually circular, as described, for example, in the Czech Utility Model No. 13658, or it forms a part of a circle or a combination of several such components. The duct is perforated and when in operation it is inflated by the air flow, while the air is distributed flowing through the perforation or passing through the material of the duct. Such ducts are fastened by means of a mounting system to a fixed part of a building.

A certain disadvantage of the above diffusers and ducts is that its shape is not stable. When the fan is switched off, the duct deflates. The manufacturers try to prevent this by using various reinforcements. These are not always used because they are expensive and must be disassembled before washing the duct and re-inserted into the duct thereafter. Particularly, insertion of each individual reinforcement into a respective pocket within the air duct is time consuming for the user. A reinforcement system for air ducts has been also disclosed, for example, in WO2012091795. A great disadvantage of such and other known reinforcements is that they complicate transport as they are very cumbersome. The duct as such can be folded into a carton and dispatched at low costs over long distances, but rigid reinforcements greatly increase the weight and demands on the transportation space. Further, a reinforcing assembly is known from Czech patent No. 304607 comprising a set of rings which are interconnected by means of cables. However, its installation and dismantling are relatively time-consuming and may involve tangling of the cables; the individual rings have to be sufficiently stiff to assure the function of the assembly, and are therefore relatively expensive and heavy.

WO2016187291 discloses a duct comprising a helical sound absorbing element.

US5526849A discloses an air duct assembly having a fire-resistant reinforcing helix. The reinforcing helix is however irremovable as it is sewn into the duct wall.

### SUMMARY

The above mentioned drawbacks are eliminated to a large extent by an air duct as defined in claim 1. The air duct comprises a reinforcing assembly comprising a helical reinforcement having an outer circumference for defining internal cylindrical circumference of the air duct, at least one connecting element for fixing the pitch of the helix formed by the helical reinforcement, the connecting element being fixed to the helical reinforcement by a plurality of joints arranged with mutual spacing where the reinforcing assembly is removably inserted inside the air duct.

The connecting element is preferably in the form of a strip or cord or string or rope or wire.

According to a further advantageous embodiment, the reinforcing assembly further comprises at least one end ring attached or attachable to an end of the helical reinforcement and / or to the ends of the connecting elements.

Preferably, the helical reinforcement is made of a metal wire or metal strip and / or the connecting elements are made of a woven or nonwoven fabric.

According to a particularly preferred embodiment, the helical reinforcement is provided with a sheath of a woven or nonwoven fabric. Then, the joints may be formed by sewing the connecting elements and the helical reinforcement to each other.

Preferably, the connecting elements extend in parallel to the axis of the helical reinforcement and / or the spacing of the joints corresponds to the pitch of the helix the helical reinforcement in that particular area between the corresponding joints. Preferably, the pitch of the helical reinforcement is 0.4 to 2 times the diameter of the helix of the helical reinforcement.

Preferably, the reinforcing assembly comprises at least one end ring, which is detachably attached to the inner wall of the air duct and which is connected to the helical reinforcement and / or the connecting elements.

### BRIEF DESCRIPTION OF THE DRAWINGS

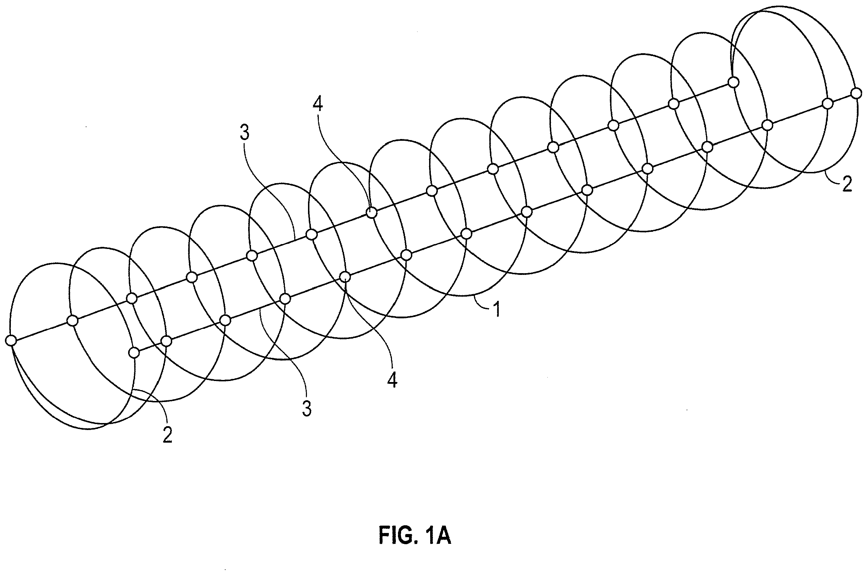

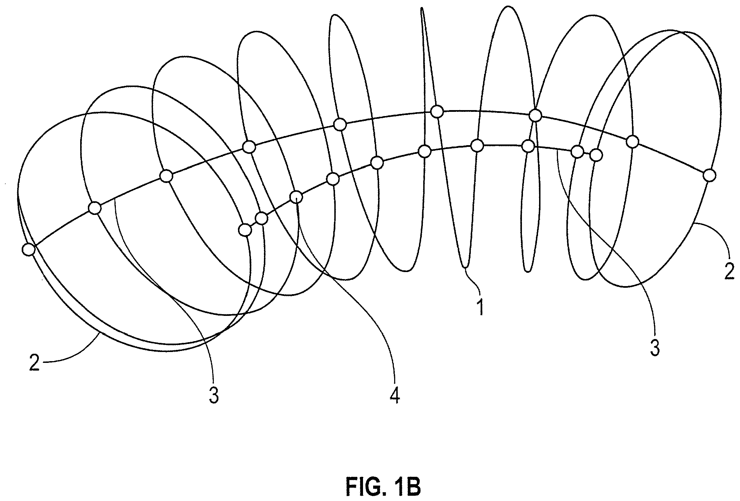

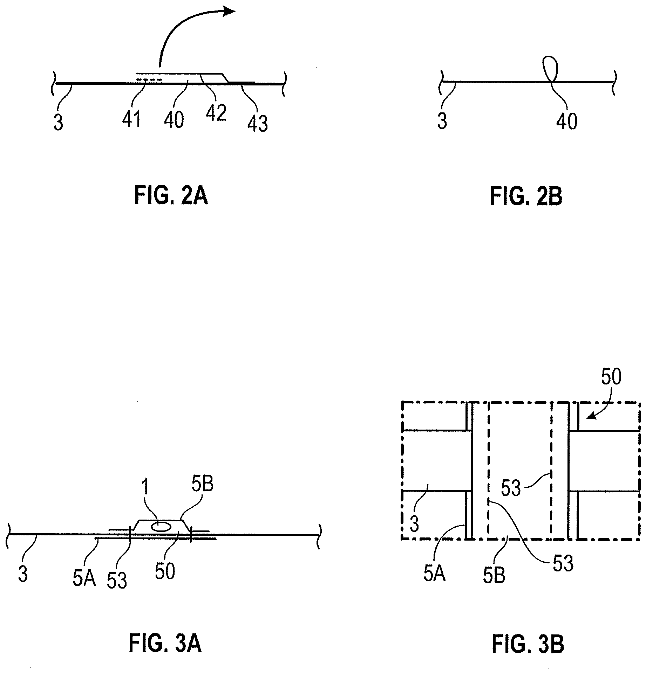

An exemplifying embodiment of the invention is schematically shown in the drawings, wherein Figure 1A shows an example of the reinforcing assembly; Figure 1B shows an example of a reinforcing assembly for an arched air duct; Figures 2A and 2B show examples of joints for connecting helical reinforcement to connecting elements,

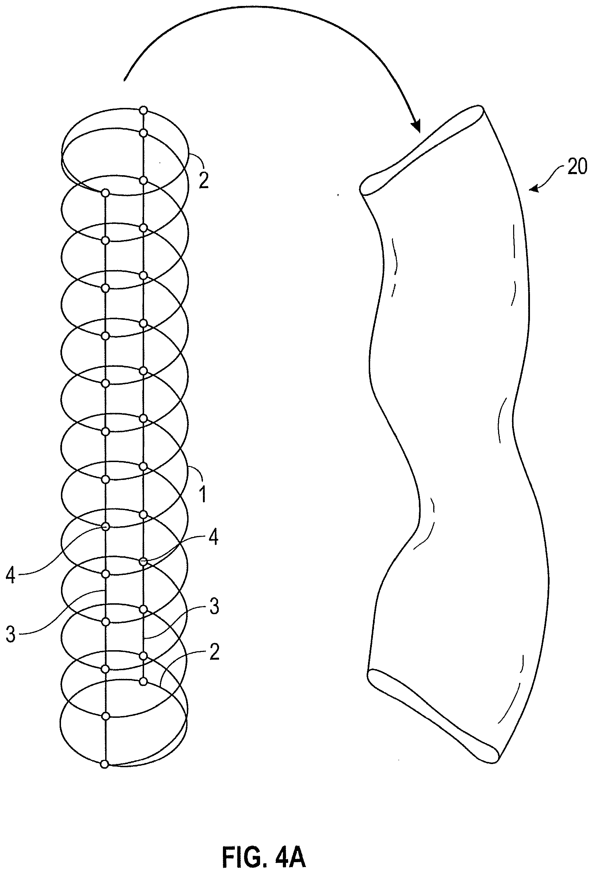

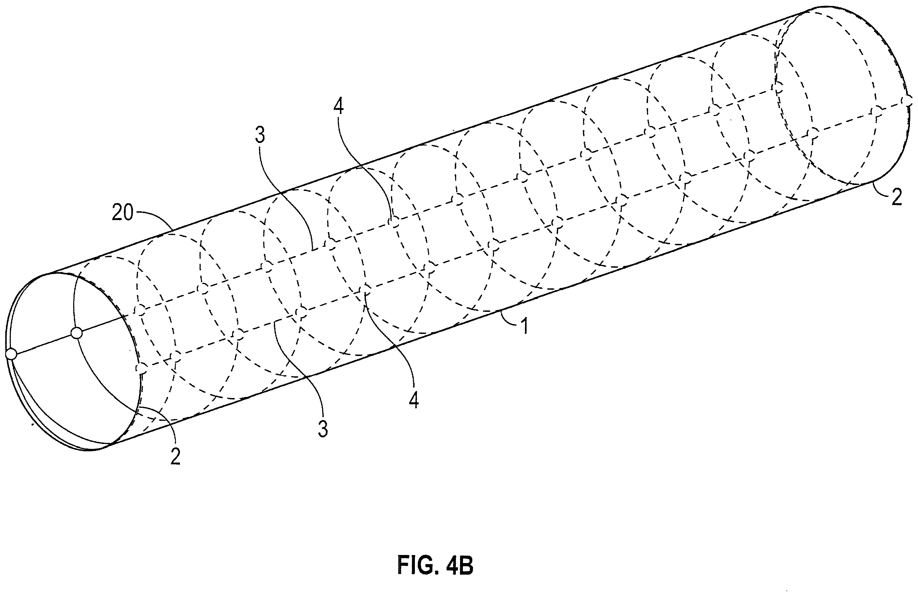

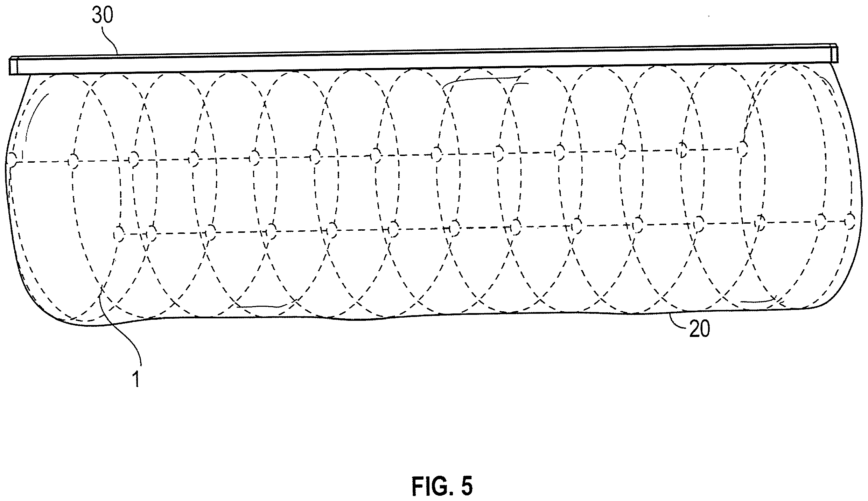

Figure 3A shows a section of another example of the joint, Figure 3B shows the joint of FIG. 3A in plan view, FIG. 4A shows a reinforcing assembly and a duct arranged separately, FIG. 4B shows the reinforcing assembly inserted in the duct, and FIG. 5 shows the duct with the assembly hung on a rail.

### PREFERRED EMBODIMENTS

The shown exemplary embodiment of the reinforcing assembly of the air duct according to the invention comprises a pair of end rings 2, between which a helical reinforcement 1 is arranged, and a pair of connecting elements 3 for defining the pitch of the helix formed by the helical reinforcement 1. The helical reinforcement 1 has an outer circumference which, upon insertion into an air conditioning duct 20, delimits the duct's cylindrical inner circumference, i.e. the reinforcement holds the walls of the air-conditioning duct 20 so as to extend substantially along a cylindrical surface, as shown e.g. in Fig. 4b. It will be appreciated that, for this purpose, the helical reinforcement 1 should have a radius substantially corresponding to the radius of the respective air duct.

A helix as used herein refers to a curve that corresponds to the movement of a point that moves evenly along an axis and at the same time it evenly circulates around the axis with a constant distance from the axis. A section corresponding to one circle around the axis (360 °) is called a thread, and the distance of its end points is called the height of the thread or pitch of the helix.

A pair of connecting elements 3 is fixed to the helical reinforcement by a set of spaced apart joints 4, which corresponds to the pitch of the helix in the area.

It will be appreciated that the helical reinforcement 1, when the connecting elements 3 have been attached, may, but does not need to have constant pitch along its entire length.

In addition, as shown in Figure 1B, the helical reinforcement 1 can fixed by means of connecting elements 3 such that its axis passes along an arc, such embodiment may be used in air ducts 20 that are arranged to form an arc.

The helical reinforcement 1 is preferably made of a galvanized metal wire or strip, preferably of a metal wire having a diameter of 1.5 to 3 mm, preferably 2 mm. It is also possible to make the helical reinforcement of a plastic or composite material strip or cable, or of a metal coated with plastic. However, in that case, it may be more difficult to ensure fire resistance of such helical reinforcements 1.

It is also advantageous, when the helical reinforcement 1 comprises not only the metal wire or strip itself, but also a textile sheath, which surrounds or covers the metal wire / strip. The advantage of such embodiment is that, in the case of corrosion of the wire or strip, this corrosion will not be visible, nor will it cause stains on the textile duct. Another advantage of this embodiment is that it is easier to connect the connecting elements 3 to the helical reinforcement 1 and to handle the reinforcing assembly more conveniently.

The textile sheath can be made in the form of a textile tube which can be removable, thus allowing the removal of a metal wire or strip from the textile sheath.

The end rings 2 may comprise reinforcing members forming a cross (not shown), or reinforcing spokes, etc. It will be appreciated that other forms of a reinforcing member may be used, or the reinforcing member may be omitted altogether, if the end ring 2 is sufficiently rigid due to the material and / or cross-section of the ring. The end rings 2 are preferably formed by a metal ring made of a rod profile having a diameter of 2 to 6 mm, preferably 3 to 5 mm, most preferably 4 mm, and advantageously for example from aluminum. Use of disk instead of the ring 2 is also possible for any of the herein described embodiments.

Attachment of the connecting elements 3 to the helical reinforcement 1 can, for example, be provided by sewing the connecting element 3 to the sheath of the helical reinforcement 1 or by means of an eye / loop / through hole, optionally with a velcro fastener (hook and loop fastener) on the connecting element 3 and / or on the sheath of the helical reinforcement and / or on a loop, which may be opened. In the most simple embodiment, the connecting elements 3 are provided with through holes arranged with predetermined mutual spacing, and the helical reinforcement 1 is guided through these through holes.

Figures 2A and 2B illustrate examples of connecting elements for connecting the helical reinforcement 1 and the connecting elements 3. Referring to Figure 2A, a part of the connecting element 3 is illustrated in the drawing, and there is a retaining strap 42 secured to the connecting element 3, for example, by stitching 43, wherein the retaining strap 42 may be lifted off in the direction shown by the arrow or tilted down and fastened in that position by a coupling element, such as a velcro 41. By such fastening, a loop 40 can be formed through which the helical reinforcement 1 may pass. The velcro may extend along the entire length of the retaining strip 42 and/or along the opposite portion of the connecting element 3, which may improve stability of the set position of the connecting element 3 with respect to the helical reinforcement 1. Referring to Figure 2B, the connecting element 3 is a cord comprising loops / eyes 40 for the passage of the helical reinforcement 1.

A particularly preferred embodiment of the joint is shown in Figures 3A and 3B. In the illustrated embodiment, the sheath of the helical reinforcement 1 is formed from a first strip 5A and a second strip 5B which extend parallel to each other and are sewn together by a pair of stitching 53 which extend along the side edges of the strips 5A and 5B, wherein a cavity 50 is formed between them, and the helical reinforcement 1 extends through the cavity 50. The connecting element 3 passes through said cavity and its position with respect to the strips 5A, 5B is defined by the stitchings 53. Obviously, the connecting element does not need to pass through the cavity 50, it may be attached to the sheath adjacent to the outer side of one of the strips 5A, 5B. The sheath may also be made from a single folded strip, which has been sewn together to form a sleeve.

A suitable number of connecting elements 3 may depend on the diameter of the duct 20 into which the reinforcing assembly is to be installed. In theory, one coupling piece 3 may be sufficient to adjust the pitch of the helical reinforcement 1. For conventional air duct diameters, it is advantageous to use a reinforcing assembly comprising at least 2, in particular 2 to 4, preferably 3 to 4, connecting elements 3.

In a particularly preferred embodiment, a two up to four, preferably three, connecting elements 3 extending in parallel to the axis of the helical reinforcement 1 are utilized in the reinforcing assembly and, preferably, are arranged with a uniform mutual angular spacing.

The connecting elements 3 are preferably made of a flexible material, preferably of a fabric. The material is preferably non-elastic. However, in another preferred embodiment, it may be advantageous to provide a better adaptability of the length and / or arcuate passage of the reinforcing assembly relative to the respective air duct 20 when at least part of at least one, or each of the connecting elements 3 is of an elastic material.

According to a preferred embodiment, both the ends of the connecting elements 3 and the ends of the helical reinforcements 1 are fastened to end rings 2. It is also possible to fasten the end rings 2 to the duct 20 itself and / or to fasten the ends of the helical reinforcement 1 to the duct 20, for example, by inserting those into pockets provided in the duct 20 at its end and / or by fastening those by means of a velcro or other, preferably dismountable, connection to the duct wall.

The duct 20 itself is, for example, hung on a rail (carrier profile) 30 or cable by means of a set of hooks or strips which are hung on the cable or inserted into a carrier profile.

In some cases it is also advantageous to fasten the end rings 2 to the rail.

In order to secure the position of the end rings 2 in a plane perpendicular to the longitudinal axis of the rail, the end rings 2 may be supported by an auxiliary supporting element which prevents tilting of the end ring 2 with respect to the rail. For example, one end of the auxiliary support element may be attached to the center crossing of the spokes and the other end is detachably attached to the rail spaced apart from the point of attachment of the respective ring 2 to the rail. Alternatively, the support element may be fastened to the ring 2 in the region more or even most distant from the point of attachment of the ring 2 to the rail. According to another embodiment, the support element can be provided in the form of an L-piece, one side of which is fixed to the ring 2 and extends in its plane and the other side is fastened to the rail and extends parallel to the longitudinal axis of the rail. According to yet another embodiment, it is possible to use a tensioning auxiliary supporting element which connects the end ring 2 with a fixed building element arranged outside the duct.

According to another preferred embodiment, any or each of end rings 2 is arranged inside the duct 20 in a removable pocket which extends along the inner circular circumference of the duct. The removable pocket is formed by a strap sewn to the inner wall of the duct 20 so as to be able to be tilted from the duct wall for insertion of the end ring 2 and then it may be tilted back towards the duct wall so that the end ring is housed in the annular cavity thus formed. In addition, the strap is preferably attachable in the position adjacent the wall by means of a fastener, for example by means of a velcro fastener.

The air duct 20 is usually attached to a source of conditioned air, possibly to a supply duct or a part thereof, and on the other side it is preferably tensioned in the longitudinal direction. The longitudinal tension of the duct 20 can be provided, for example, by means of a tensioning element, which is fixed to the radial end wall of the duct 20 at one side and to a rail or to a rigid building element outside the duct 20 on the other. Alternatively, the longitudinal tension can be provided by means of a loop on the upper side of the end radial wall or of the side wall of the duct 20, the loop being fixed relative to the rail.

Thanks to the end rings 2 and the helical reinforcement 1, it is possible to maintain the shape of the air duct 20 even during the period when the fan is switched off, or when there is lowered pressure in the duct. In such a situation, the outer circumference of the helical reinforcement 1 contributes to maintaining the shape of the duct 20 between the end rings 2.

However, the use of the end rings 2 is not necessary. For example, at the inlet end of the air conduit, the end ring may be replaced by a structural member belonging to the inlet duct or device and at the other end, for example, the helical reinforcement 1 can be secured by means of the connecting elements 3 or by means of a separate connecting element or directly to the duct 20 so that its last thread or two has substantially zero pitch. In other words, the end ring can be formed directly from the helical reinforcement 1.

Functionality of the reinforcing assembly 1 is maintained without the necessity of any adjustments, even when it is necessary to extend the air duct 20 to form an arc, that is, when the rail, on which the air duct 20 is suspended, is arched.

During installation, the reinforcing assembly is assembled and then, for example, it is inserted into the air duct 20 at one end thereof, the first end ring 2 heading (at that time the duct 20 may be draped, partially draped or fully stretched in the longitudinal direction). Then, the first end ring 2 is at least temporarily fixed to the duct 20 and by pulling the other end ring 2 and / or the end of the helical reinforcement 1, the helical reinforcement 1 is stretched (along with the duct wall, if it has been draped) so that in the end the connecting elements 3 are stretched within the duct 20. Then the other end ring 2 is at least temporarily fixed to the duct 20 or to an external tensioning element (not shown).

### INDUSTRIAL APPLICABILITY

The air duct with the reinforcing assembly according to the invention may be used as air conditioning ducts 20 made from woven or nonwoven fabrics or foils, which are industrially usable in air conditioning installations, especially in plants with higher demands on hygiene and cleanliness.

## Claims

1. An air duct (20) comprising a reinforcing assembly which comprises:
- a helical reinforcement (1) with an outer circumference for defining internal cylindrical circumference of the air duct,
**characterized in that** the reinforcing assembly further comprises
- at least one connecting element (3) for fixing the pitch of the helix formed by the helical reinforcement (1), the connecting element (3) being fixed to the helical reinforcement (1) by a plurality of joints (4) arranged with mutual spacing,
and **in that** the reinforcing assembly is removably inserted inside the air duct (20).

2. The air duct (20) according to claim 1, **characterized in that** the connecting element (3) is in the form of a strip or cord or string or rope or wire.

3. The air duct (20) according to claim 1 or 2, **characterized in that** the assembly further comprises at least one end ring (2) attached or attachable to an end of the helical reinforcement and / or to the ends of the connecting elements (3).

4. The air duct (20) according to any of the preceding claims, **characterized in that** the helical reinforcement (1) is made of a metal wire or metal strip and / or that the connecting elements (3) are made of a woven or nonwoven fabric.

5. The air duct (20) according to any of the preceding claims, **characterized in that** the helical reinforcement (1) is provided with a sheath of a woven or nonwoven fabric.

6. The air duct (20) according to claim 5, **characterized in that** the joints (4) are formed by sewing the connecting elements (3) and the sheath of the helical reinforcement (1) to each other.

7. The air duct (20) according to any one of the preceding claims, **characterized in that** the connecting elements (3) extend in parallel to the axis of the helical reinforcement (1) and / or the spacing of the joints (4) corresponds to the pitch of the helix of the helical reinforcement (1).

8. The air duct (20) according to any of the preceding claims, **characterized in that** the pitch of the helical reinforcement (1) is 0.4 to 2 times the diameter of the helix of the helical reinforcement (1).

9. The air duct system according to any of the preceding claims, **characterized in that** the reinforcing assembly comprises at least one end ring (2) which is detachably attached to the inner wall of the air duct (20) and which is connected to the helical reinforcement (1) and / or the connecting elements (3).

## Patentansprüche

1. Luftkanal (20), der eine Verstärkungsanordnung umfasst, die Folgendes umfasst:
- eine helixförmige Verstärkung (1) mit einem Außenumfang zum Definieren des inneren zylindrischen Umfangs des Luftkanals,
**dadurch gekennzeichnet, dass** die Verstärkungsanordnung ferner Folgendes umfasst:
- mindestens ein Verbindungselement (3) zum Fixieren der Steigung der die helixförmige Verstärkung (1) bildenden Helix, wobei das Verbindungselement (3) zu der helixförmigen Verstärkung (1) durch eine Vielzahl von Verknüpfungen (4) befestigt ist, die zueinander beabstandet angeordnet sind,
und dadurch, dass die Verstärkungsanordnung herausnehmbar in dem Luftkanal (20) eingesetzt ist.

2. Luftkanal (20) nach Anspruch 1, **dadurch gekennzeichnet, dass** das Verbindungselement (3) als Band oder Schnur oder Schnur oder Seil oder Draht ausgebildet ist.

3. Luftkanal (20) nach Anspruch 1 oder 2, **dadurch gekennzeichnet, dass** die Anordnung ferner mindestens einen Endring (2) umfasst, der an einem Ende der spiralförmigen Verstärkung und/oder an den Enden der Verbindungselemente (3) angebracht oder anbringbar ist.

4. Luftkanal (20) nach einem der vorhergehenden Ansprüche, **dadurch gekennzeichnet, dass** die helixförmige Verstärkung (1) aus einem Metalldraht oder Metallband erzeugt sind und/oder dass die Verbindungselemente (3) aus einer gewebten oder ungewebten Textilie erzeugt sind.

5. Luftkanal (20) nach einem der vorhergehenden Ansprüche, **dadurch gekennzeichnet, dass** die helixförmige Verstärkung (1) mit einer Ummantelung aus einer gewebten oder ungewebten Textilie versehen ist.

6. Luftkanal (20) nach Anspruch 5, **dadurch gekennzeichnet, dass** die Verknüpfungen (4) durch Vernähen der Verbindungselemente (3) und der Ummantelung der helixförmigen Verstärkung (1) miteinander gebildet sind.

7. Luftkanal (20) nach einem der vorhergehenden Ansprüche, **dadurch gekennzeichnet, dass** die Verbindungselemente (3) parallel zur Achse der helixförmigen Verstärkung (1) verlaufen und/oder der Abstand der Verknüpfungen (4) der Steigung der Helix der helixförmigen Verstärkung (1) entspricht.

8. Luftkanal (20) nach einem der vorhergehenden Ansprüche, **dadurch gekennzeichnet, dass** die Steigung der helixförmigen Verstärkung (1) das 0,4- bis 2-fache des Durchmessers der Helix der helixförmigen Verstärkung (1) beträgt.

9. Luftkanalsystem nach einem der vorhergehenden Ansprüche, **dadurch gekennzeichnet, dass** die Verstärkungsanordnung mindestens einen Endring (2) umfasst, der lösbar an der Innenwand des Luftkanals (20) befestigt und mit der helixförmigen Verstärkung (1) und/oder den Verbindungselementen (3) verbunden ist.

## Revendications

1. Conduit (20) d'air, comprenant un ensemble de renfort qui comprend :
- un renfort (1) hélicoïdal ayant une circonférence extérieure pour définir une circonférence cylindrique intérieure du conduit d'air,
**caractérisé en ce que** l'ensemble de renfort comprend de plus :
- au moins un élément (3) de raccordement pour fixer le pas de l'hélice formée par le renfort (1) hélicoïdal, l'élément (3) de raccordement étant fixé au renfort (1) hélicoïdal par une pluralité de joints (4) disposés avec un espacement mutuel, et **en ce que** l'ensemble de renfort est inséré de façon amovible dans le conduit (20) d'air.

2. Conduit (20) d'air selon la revendication 1, **caractérisé en ce que** l'élément (3) de raccordement est en forme d'une bande ou un cordon ou une corde ou un cordage ou un câble.

3. Conduit (20) d'air selon la revendication 1 ou 2, **caractérisé en ce que** l'ensemble comprend de plus au moins un anneau (2) d'extrémité, attaché ou capable d'être attaché à une extrémité du renfort hélicoïdal et/ou aux extrémités des éléments (3) de raccordement.

4. Conduit (20) d'air selon l'une quelconque des revendications précédentes, **caractérisé en ce que** le renfort (1) hélicoïdal est fait d'un câble métallique ou une bande métallique et/ou que les éléments (3) de raccordement sont faits de tissu tissé ou non-tissé.

5. Conduit (20) d'air selon l'une quelconque des revendications précédentes, **caractérisé en ce que** le renfort (1) hélicoïdal est doté d'une gaine faite de tissu tissé ou non tissé.

6. Conduit (20) d'air selon la revendication 5, **caractérisé en ce que** les joints (4) sont formés par couture des éléments (3) de raccordement et la gaine du renfort (1) hélicoïdal l'un à l'autre.

7. Conduit (20) d'air selon l'une quelconque des revendications précédentes, **caractérisé en ce que** les éléments (3) de raccordement s'étendent parallèlement à l'axe du renfort (1) hélicoïdal et/ou l'espacement de joints (4) correspond au pas de l'hélice du renfort (1) hélicoïdal.

8. Conduit (20) d'air selon l'une quelconque des revendications précédentes, **caractérisé en ce que** le pas du renfort (1) hélicoïdal est de 0.4 à 2 fois le diamètre de l'hélice du renfort (1) hélicoïdal.

9. Système de conduit d'air selon l'une quelconque des revendications précédentes, **caractérisé en ce que** l'ensemble de renfort comprend au moins un anneau (2) d'extrémité qui est fixé de manière détachable à la paroi intérieure de conduit (20) d'air et qui est connectée au renfort (1) hélicoïdal et/ou aux éléments (3) de raccordement.
